# EUROPÄISCHE PATENTANMELDUNG

(11) **EP 1 104 039 A2**
(43) Veröffentlichungstag der Anmeldung: **30.05.2001**
(21) Anmeldenummer: 00121985.6
(22) Anmeldetag: 10.10.2000
(51) Int. Cl.: H01M 8/06, H01M 8/04

(54) **Anordnung mit Brennstoffzellen und Gasversorgungssystem sowie Verfahren zum Betreiben der Anordnung**

(30) Priorität: 24.11.1999 DE 19956376
(71) Anmelder: XCELLSIS GmbH, 73230 Kirchheim/Teck-Nabern (DE)
(72) Erfinder: Kaufmann, Lars, 73265 Dettingen/Teck (DE)
(74) Vertreter: Kocher, Klaus-Peter Dipl.-Phys

(57) **Zusammenfassung**

Die Erfindung betrifft eine Anordnung mit zumindest einer Brennstoffzelle mit Anode und Kathode, mit einem Medien-Zustromweg für die Anode und einem Medien-Zustromweg für die Kathode, einem Anodenabgas-Strömungsweg und einem Kathodenabgas-Strömungsweg, wobei im Zustromweg der Kathode ein Verdichter zur Luftversorgung der Kathode vorgesehen ist, wobei im Zustromweg der Anode eine Reformierungseinheit mit einem Reformer und einem Heizraum zur Versorgung der Anode mit einem wasserstoffreichen Medium angeordnet ist, wobei im Kathodenabgas-Strömungsweg zwischen Kathode und einer Expansionsmaschine ein katalytischer Brenner angeordnet ist, wobei der Heizraum mit dem Reformer thermisch gekoppelt ist, wobei der Verdichter mit der Expansionsmaschine gekoppelt ist, wobei der Heizraum der Reformierungseinheit und/oder ein Heizraum einer im Zustromweg der Anode angeordneten Verdampfereinheit im Kathodenabgas-Strömungsweg angeordnet und die Expansionsmaschine im Kathodenabgas-Strömungsweg zwischen katalytischem Brenner und dem Heizraum angeordnet ist.

## Beschreibung

Die Erfindung betrifft eine Anordnung mit Brennstoffzellen und Gasversorgungssystem und ein Verfahren zum Betreiben der Anordnung gemäß den Oberbegriffen der unabhängigen Ansprüchen.

Aus der gattungsgemäßen US-A1-3,972,731 ist ein Brennstoffzellensystem bekannt, bei dem zur Luftversorgung der Brennstoffzellen-Kathode ein Kompressor eingesetzt wird, der mit einer Turbine über eine gemeinsame Welle verbunden ist. Die Brennstoffzellen-Anode wird mit einem wasserstoffreichen Reformat beaufschlagt, welches durch eine endotherme Reaktion in einem Dampfreformer erzeugt wird. Der Dampfreformer ist thermisch mit einem katalytischen Brenner gekoppelt. Das heiße und feuchte Kathodenabgas wird in einem Wasserabscheider stark abgekühlt, entfeuchtet und anschließend durch einen im Abgasstrang angeordneten katalytischen Brenner wieder erhitzt. Das erhitzte Abgas treibt die mit dem Kompressor gekoppelte Turbine an.

Brennstoffzellensysteme benötigen zur Luftversorgung der Kazhodenseite üblicherweise eine Verdichtungsmaschine. Sowohl bei methanolbetriebenen Systemen als auch mit anderen Kraftstoffen betriebenen Systemen ist ein hoher Systemdruck an sich vorteilhaft. So wird z.B. die Wasserbilanz des Systems verbessert. Weiterhin steigt der Wirkungsgrad der Brennstoffzelle durch den höheren Sauerstoffpartialdruck, und die Druckverluste im Brennstoffzellensystem werden minimiert.

Ein erhöhtes Druckniveau ist jedoch mit einer höheren Aufnahmeleistung der Verdichtungsmaschine verbunden, was zu Wirkungsgradeinbußen und bei gleicher Nutzleistung zu einer Vergrößerung des Brennstoffzellensystems führt.

Ein erhöhtes Abgastemperaturniveau ermöglicht zwar die Verwendung einer Turbine, um Abgasenergie zurückzugewinnen, jedoch ist der Wirkungsgradverlust um so höher, je höher die Abgastemperatur liegt, da auch Abgaswärme verloren geht.

Es ist die Aufgabe der Erfindung, eine Vorrichtung anzugeben, die eine verbesserte Ausnutzung der Kathoden-Abgaswärme erlaubt.

Diese Aufgabe wird bei einer gattungsgemäßen Vorrichtung gemäß Anspruch 1 durch die Merkmale im kennzeichnenden Teil des Anspruchs gelöst.

Bei einer erfindungsgemäßen Anordnung ist ein Heizraum einer Reformierungseinheit und/oder ein Heizraum einer im Zustromweg der Anode angeordneten Verdampfereinheit im Kathodenabgas-Strömungsweg angeordnet, sowie eine Expansionsmaschine im Kathodenabgas-Strömungsweg zwischen einem katalytischen Brenner und dem Heizraum angeordnet. Der Vorteil besteht darin, daß zum einen die beträchtliche thermische Energie des heißen Abgases zur Rekuperation genutzt werden kann. Zum anderen kann das System auch bei hohem Druck betrieben werden, ohne daß Wirkungsgradeinbußen hingenommen werden oder Komponenten größer als nötig ausgelegt werden müssen, da die elektrische Verdichterleistung gering bleibt.

Vorzugsweise weist die Reformierungseinheit einen durch einen Heizraum beheizten Reformierungsraum zur Durchführung einer Reformierungsreaktion auf, wobei der Heizraum als Wärmetauscher ausgebildet ist. Abgas der Brennstoffzelle, welches durch den katalytischen Brenner auf eine hohe erste Temperatur erhitzt wird, vorzugsweise zumindest Kathodenabgas, wird im Heizraum auf eine sehr niedrige Temperatur abgekühlt. Es ist kein katalytischer Brenner notwendig, um eine Reformierungsreaktion und/oder eine Verdampfung zustromseits der Anode zu unterstützen.

Vorzugsweise wird das Kathodenabgas im katalytischen Brenner auf eine erste Temperatur zwischen 450°C und 900°C erhitzt und nach Abkühlung in einer Expansionsmaschine um etwa 50°C bis 200°C anschließend dem Heizraum der Reformierungs- und/oder Verdampfereinheit zugeführt, wo das Medium im Kathodenabgas-Strömungsweg durch Wärmetausch auf eine niedrigere Temperatur von vorzugsweise unter 200°C abgekühlt wird.

Vorzugsweise ist die Verdampfereinheit als Heißgasverdampfer ausgebildet.

Vorteilhaft ist, als Expansionsmaschine einen Abgasturbolader oder einen Turbogenerator vorzusehen. Damit kann die hohe Abgastemperatur abstromseits des katalytischen Brenners ausgenutzt werden.

In einer weiteren bevorzugten Ausführung weist der katalytische Brenner eine Zudosiereinrichtung von Brennmittel auf. Dabei erfolgt die Zudosierung des Brennmittels in den katalytischen Brenner vorzugsweise abhängig von einer gewünschten Temperatur des Mediums im Heizraum der Reformierungs- und/oder Verdampfereinheit. Besonders vorteilhaft ist es dabei, die Zudosierung des Brennmittels in den katalytischen Brenner zu steuern, wobei Daten aus einem Kennfeld einer Steuereinrichtung entnommen werden, welches einen Temperaturabfall des Kathodenabgases über der Expansionsmaschine enthält.

In einer bevorzugten Ausführung wird dem Kathodenabgas-Strömungsweg zustromseits des katalytischen Brenners Abgas aus der Anode als Brennmittel zugeführt. Vorzugsweise wird Anodenabgas und Kathodenabgas in einem Mischer zusammengeführt und gemischt.

In einer bevorzugten Ausführung ist zwischen Expansionsmaschine und Reformierungs- und/oder Verdampfereinheit ein Abblasventil angeordnet. Dies dient der Sicherheit des Systems, so daß Reformierungs- und/oder Verdampfereinrichtung nicht mit unzulässig hohen Energiemengen des Wärmetauschermediums beaufschlagt werden.

Zweckmäßigerweise ist der Verdichter mechanisch über eine gemeinsame Welle oder elektrisch mit der Expansionsmaschine gekoppelt.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung einer besonders bevorzugten erfindungsgemäßen Anordnung und
- Fig. 2: eine bevorzugte Ausführungsform eines Brennstoffzellensystems nach dem Stand der Technik.

Die Erfindung ist sowohl für stationäre für Brennstoffzellensysteme geeignet als auch für solche Brennstoffzellenanlagen, die für den Betrieb von Fahrzeugen bestimmt sind. Besonders vorteilhaft ist die Erfindung für Brennstoffzellensysteme, die üblicherweise bei niedrigen Temperaturen betrieben werden, wie etwa Brennstoffzellensysteme mit Polymerelektrolytmembranen, insbesondere solchen, bei denen Brennmittel wie Methanol eingesetzt werden. Dort stehen hohe Temperaturen im System üblicherweise nicht zur Verfügung oder sind der Temperaturbilanz wegen nicht erwünscht.

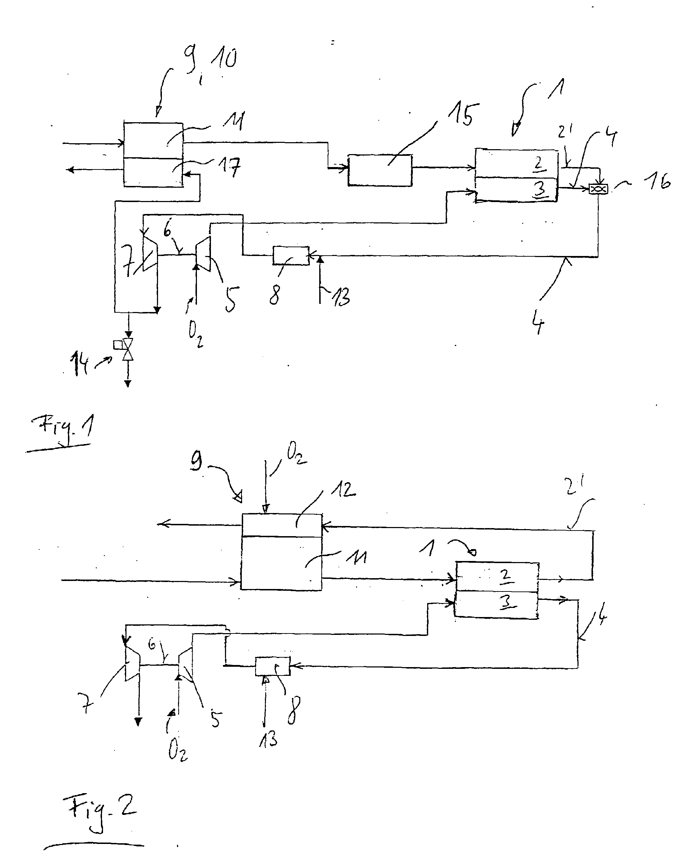

In Fig. 2 ist eine Anordnung gemäß dem Stand der Technik dargestellt. Eine Brennstoffzelle 1 weist eine Anode 2 und eine Kathode 3 auf. Die Brennstoffzelle ist vereinfacht als eine einzige Zelle dargestellt, kann aber auch einen Stapel von Brennstoffzellen repräsentieren.

Die Anode 2 wird über einen Medien-Zustromweg mit einem wasserstoffreichen Reformat aus einer Reformierungseinheit 9 mit einem Reformer 11 und einem thermisch gekoppelten Heizraum 12, welcher durch einen katalytischen Brenner gebildet wird, mit wasserstoffhaltigem Medium beaufschlagt. Das Abgas aus der Anode 2 wird über einen Anodenabgas-Strömungsweg 2' dem katalytischen Brenner 12 zugeführt, wobei beim katalytischen Brenner 12 noch eine Luftzudosierung zur Zufuhr von 02 als Brennmittel vorgesehen ist. Vom katalytischen Brenner 12 aus kann das Anodenabgas noch in einen Wärmetauscher zur Wasserverdampfung eingesetzt werden und/oder in die Atmosphäre entsorgt werden. Die im katalytischen Brenner 12 erzeugte Wärme unterstutzt die endotherme Reformierungsreaktion im Reformer 11.

Ein Verdichter 5 ist in einem Medien-Zustromweg für die Kathode 3 angeordnet und verdichtet ein sauerstoffhaltiges Medium O₂, bevorzugt Luft, welches der Kathode 3 mit hohem Druck zugeführt wird. In der Brennstoffzelle findet dann die Reaktion zwischen den sauerstoff- und wasserstoffhaltigen Medien statt. Im Kathodenabgas-Strömungsweg 4 ist ein katalytischer Brenner 8 angeordnet, welcher das Kathodenabgas mit weiterem Brennstoff verbrennt und so die Abgastemperatur erhöht. Dazu wird über eine Zudosiereinrichtung 13 dem katalytischen Brenner 8 zusätzlich ein Brennmittel zudosiert.

Das heiße Kathodenabgas gelangt über den Kathodenabgas-Strömungsweg 4 in eine Expansionsmaschine 7. Expansionsmaschine 7 ist vorzugsweise mit dem Verdichter 5 gekoppelt, besonders bevorzugt mechanisch über eine gemeinsame Welle 6. Die bevorzugte Expansionsmaschine 7 ist eine Turbine und kann durch die aus dem heißen Abgas rekuperierte Energie den Verdichter 5 antreiben.

In Fig. 1 ist eine besonders bevorzugte Ausführung der erfindungsgemäßen Anordnung schematisch dargestellt. Gleiche Elemente sind mit denselben Bezugszeichen wie in Fig. 1 bezeichnet.

Ein wasserstoffreiches Medium gelangt in einen Reformer 11 einer Reformierungseinheit 9 und wird über einen Anoden-Zustromweg weiter in eine Kohlenmonoxid-Entfernungseinheit 15 geleitet, dort gereinigt und als wasserstoffreiches Reformat einer Anode 2 einer Brennstoffzelle 1 zugeführt. Die Reformierungseinheit 9 weist einen Reformer 11 und einen damit thermisch gekoppelten Heizraum 17 auf.

Die Brennstoffzelle 1 ist der Einfachheit wegen durch eine einzige Zelle mit Anode 2 und Kathode 3 dargestellt. Es kann jedoch auch ein Brennstoffzellenstapel mit einer Mehrzahl von Zellen vorgesehen sein, die z.B. so verschaltet sind, daß deren elektrische Leistung zur Bordnetzversorgung und/oder zum Antreiben eines Fahrzeugs ausreicht.

Die Kathode 3 wird über einen Medien-Zustromweg für die Kathode 3 mit sauerstoffhaltigem Medium 0₂ versorgt, vorzugsweise Luft.

Dieses Medium wird in einem im Medien-Zustromweg angeordneten Verdichter 5, vorzugsweise einem Kompressor, auf ein gewünschtes Druckniveau verdichtet und der Kathode 3 zugeführt. Ein bevorzugtes Druckniveau liegt oberhalb von etwa 2 bar absolut. Die Kathodenabluft wird in einem Kathodenabgas-Strömungsweg 4 aus der Kathode 3 weggeführt. In einem Mischer 16 wird Anodenabgas aus dem Anodenabgas-Strömungsweg 2' dem Kathodenabgas im Kathodenabgas-Strömungsweg 4 zugemischt und weiter über den Kathodenabgas-Strömungsweg 4 einem katalytischen Brenner 8 zugeführt. Am oder im katalytischen Brenner 8 kann über eine Zudosiereinrichtung 13 dem Gemisch vorzugsweise wasserstoffhaltiger Brennstoff zusätzlich zudosiert werden. Ein günstiger Brennstoff ist Methanol, und/oder Benzin und/oder Methan.

Das Kathodenabgas-Gemisch wird beim Durchströmen des katalytischen Brenners 8 auf eine erste hohe Temperatur T₁, vorzugsweise zwischen 450°C und 900°C, erhitzt. Das heiße Medium gelangt dann zu einer Expansionsmaschine 7, vorzugsweise einem Turbolader. Die Expansionsmaschine 7 treibt vorzugsweise den Verdichter 5 über eine Kopplung an. Der Verdichter 5 kann einstufig oder auch zwei- oder mehrstufig sein. Vorzugsweise erfolgt die Kopplung über eine gemeinsame Welle 6 zwischen Verdichter 5 und Expansionsmaschine 7, die Einkopplung der aus dem heißen Abgas rekuperierten Energie in den Verdichter 5 kann jedoch auch elektrisch erfolgen; in diesem Fall ist ein Turbogenerator vorzusehen. Das Abgas wird dabei auf eine zweite Temperatur T₂ abgekühlt, die niedriger als die erste Temperatur T₁ ist, vorzugsweise beträgt die Temperaturdifferenz ΔT zwischen erster Temperatur T₁ und zweiter Temperatur T₂ zwischen 50°C und 200°C.

Aus der Expansionsmaschine 7 gelangt das abgekühlte Abgas zu der Reformierungseinheit 9 und durchströmt den Heizraum 17 der Reformierungseinheit 9. Dort wird die Abgasenergie in einem Heizraum 17 dazu verwendet, die endotherme Reformierungsreaktion im Reformer 12 zu unterstützen. Statt der beheizten Reformierungseinheit 9 kann auch ein Verdampfer 10 vorgesehen sein, der als Heißgasverdampfer die Wärme des Abgases nutzt; das Abgas strömt dann durch den Heizraum 17 des Verdampfers 10. Die Temperatur des Mediums im Heizraum 17 wird stark auf eine dritte Temperatur T₃ abgekühlt, die bevorzugt unter etwa 200°C liegt. Ganz besonders bevorzugt ist, den Heizraum 17 als Wärmetauscher vorzusehen.

Falls die Temperatur des Abgases abstromseits der Expansionsmaschine 7 zu hoch ist, ist ein Abblasventil 14 vorgesehen. Ein Teil des Abgases wird in diesem Fall vor dem Heizraum 17 abgeblasen.

Die Expansionsmaschine 7 kann bei erhöhter Abgastemperatur eine erhebliche Leistung in das System bzw. in den Verdichter 5 zurückführen. Ein etwaiger elektrischer Antrieb des Verdichters 5 kann dadurch kleiner ausgelegt werden als ohne die erfindungsgemäße Anordnung. Da jedoch das Abgas beim Verlassen der Expansionsmaschine 7 noch eine relativ hohe Temperatur aufweist, würde dieses Temperaturniveau einen hohen Wirkungsgradverlust für das Gesamtsystem bedeuten. Durch die Ausnutzung der nach der Expansionsmaschine 7 zur Verfügung stehenden noch relativ hohen Abgastemperatur T₂ in einem als Wärmetauscher fungierenden Heizraum 17 in der Reformierungs-und/oder Verdampfereinheit 9, 10 wird das Temperaturniveau des Abgases jedoch nochmals abgesenkt, so daß der Gesamtwirkungsgrad insgesamt verbessert werden kann. Die Abgastemperatur kann im Wärmetauscher 17 sehr stark abgesenkt werden, z.B. auf Temperaturen unter 100°C. Bevorzugt werden die Temperaturen T₃ auf Werte unterhalb von 200°C, besonders bevorzugt unterhalb von etwa 150°C abgesenkt.

Werden die Abgastemperaturen T₁ im katalytischen Brenner 8 sehr stark erhöht, so kann je nach Systemauslegung der Fall eintreten, daß das Temperaturniveau T₂ des Abgases an der Expansionsmaschine 7 höher ist, als zum Betreiben der Reformierungseinheit 9 und/oder der Verdampfereinheit 10 notwendig ist. Es besteht die Möglichkeit, im Vollastfall die notwendige Verdichterleistung noch weiter zu senken und somit die Nutzleistung zu erhöhen. Somit kann die erforderliche Brennstoffzellenleistung und somit das Gesamtsystem bei gleicher Nutzleistung verkleinert werden. Dies hat positive Auswirkungen auf Kosten, Volumen und Masse des Brennstoffzellensystems.

Im extremen Auslegungsfall kann die Verdichter-/Expansionsmaschinengruppe 5, 7 auch den Generatorbetrieb erreichen, d.h. die Expansionsmaschine 7 erzeugt soviel Energie, daß nicht nur die Verdichtung vollständig bestritten werden kann, sondern auch noch an einen elektrischen Antriebsmotor des Verdichters 5 elektrische Energie abgeben kann. Da diesem extremen Auslegungsfall sehr hohe Abgastemperaturen, z.B. zwischen 800°C bis 900°C entsprechen, wird zweckmäßigerweise ein Teil des Abgases vor dem Heizraum 17 über das Ventil 14 abgeblasen.

Besonders bevorzugt ist, die Abgastemperatur am Heizraum 17 durch die Zudosierung von Brennmittel, vorzugsweise ein Kraftstoff, besonders bevorzugt ein methanolhaltiges Medium, in den katalytischen Brenner 8 zu steuern oder zu regeln.

Wird die Verdichter-/Expansionsmaschinen-Gruppe 5, 7 gesteuert, so wird der Temperaturabfall des Abgases über der Expansionsmaschine 7 mittels eines Kennfeldes in einem Datenspeicher, vorzugsweise in einer Steuereinrichtung, abgelegt und das Dosierventil 13 im Betrieb entsprechend eingestellt. Vorzugsweise gibt das Kennfeld den Temperaturabfall abhängig von der Last und dem Druckverhältnis π der Expansionsmaschine 7 an; wobei π das Verhältnis zwischen dem Druck am Expansionsmaschinen-Eingang zu dem Druck am Expansionsmaschinen-Ausgang angibt. So ergibt sich z.B. bei einem System bei Vollast und einem Druckverhältnis von π = 2,5- 3 ein Temperaturabfall von z.B. 60°C-120°C über der Expansionsmaschine 7, abhängig von deren Wirkungsgrad.

Aufgrund der hohen Temperaturen ist der Umsatz im katalytischen Brenner 8 trotz der dort stattfindenden Brennstoffzudosierung sehr gut, so daß keine nennenswerten HC-Emissionen zu befürchten sind. Andererseits ist das Temperaturniveau niedrig genug, daß keine Stickoxidbildung stattfindet.

Die erfindungsgemäße Anordnung erlaubt es, die Vorteile von Systemen mit hohem Druckniveau einerseits und hohem Abgastemperaturniveau andererseits auszunutzen, ohne deren Nachteile wie ein vergrößertes System oder einen verschlechterten Gesamtwirkungsgrad in Kauf nehmen zu müssen.

Es ermöglicht eine kleinere Dimensionierung des Stromerzeugungssystems als bei einem konventionellen Brennstoffzellensystem, da im Vollastfall z.B. zusätzliches Methanol über Zudosierung in den katalytischen Brenner 8 und Erzeugung sehr hoher Abgastemperaturen direkt in elektrische Energie umwandelbar ist.

Vorzugsweise ist eine Systemarchitektur zu wählen, bei der zumindest an einer Stelle im Abluftstrang des Systems ein hohes Temperaturniveau herrscht. An dieser Stelle ist zweckmäßigerweise die Expansionsmaschine 7 zu plazieren und nachfolgend das Abgas abzukühlen. Die nachfolgenden Druckverluste im Gasströmungsweg sollten minimiert werden.

Die Expansionsmaschine 7 ist somit innerhalb des Gaserzeugungssystems des Brennstoffzellensystems angeordnet. Eine zusätzliche Schalldämmungskomponente für die Expansionsmaschine 7 entfällt, da der Wärmetauscher 7 diese Aufgabe erfüllt.

## Patentansprüche

1. Anordnung mit zumindest einer Brennstoffzelle (1) mit Anode (2) und Kathode (3), mit einem Medien-Zustromweg für die Anode (2) und einem Medien-Zustromweg für die Kathode (3), einem Anodenabgas-Strömungsweg (2') und einem Kathodenabgas-Strömungsweg (4), wobei im Zustromweg der Kathode (3) ein Verdichter (5) zur Luftversorgung der Kathode (3) vorgesehen ist, wobei im Zustromweg der Anode (2) eine Reformierungseinheit (9) mit einem Reformer (11) und einem Heizraum (12) zur Versorgung der Anode (2) mit einem wasserstoffreichen Medium angeordnet ist, wobei im Kathodenabgas-Strömungsweg (4) zwischen Kathode (3) und einer Expansionsmaschine (7) ein katalytischer Brenner (8) angeordnet ist, wobei der Heizraum (12) mit dem Reformer (11) thermisch gekoppelt ist,
dadurch gekennzeichnet,
daß der Heizraum (17) der Reformierungseinheit (9) und/oder ein Heizraum (17) einer im Zustromweg der Anode (2) angeordneten Verdampfereinheit (10) im Kathodenabgas-Strömungsweg (4) angeordnet ist und daß die Expansionsmaschine (7) im, Kathodenabgas-Strömungsweg (4) zwischen katalytischem Brenner (8) und dem Heizraum (17) angeordnet ist.

2. Anordnung nach Anspruch 1,
dadurch gekennzeichnet,
daß der Heizraum (17) der Reformierungseinheit (9) ein Wärmetauscher zur Aufrechterhaltung der Reformierungsreaktion ist.

3. Anordnung nach Anspruch 1,
dadurch gekennzeichnet,
daß die Verdampfereinheit (10) als Heißgasverdampfer ausgebildet ist.

4. Anordnung nach Anspruch 1,
dadurch gekennzeichnet,
daß die Expansionsmaschine (7) als Abgasturbolader oder Turbogenerator ausgebildet ist.

5. Anordnung nach Anspruch 1,
dadurch gekennzeichnet,
daß der katalytische Brenner (8) eine Zudosiereinrichtung (13) für Brennmittel aufweist.

6. Anordnung nach Anspruch 1,
dadurch gekennzeichnet,
daß zustromseits des katalytischen Brenners (8) Abgas aus der Anode (1) dem Kathodenabgas-Strömungsweg (4) zuführbar ist.

7. Anordnung nach Anspruch 1,
dadurch gekennzeichnet,
daß im Zustromweg der Anode (1) eine Kohlenmonoxid-Entfernungseinheit (15) angeordnet ist.

8. Anordnung nach Anspruch 1,
dadurch gekennzeichnet,
daß zwischen Expansionsmaschine (7) und Reformierungs- und/oder Verdampfereinheit (9, 10) ein Abblasventil (14) angeordnet ist.

9. Anordnung nach Anspruch 1,
dadurch gekennzeichnet,
daß der Verdichter (5) über eine gemeinsame Welle (6) mit der Expansionsmaschine (7) gekoppelt ist.

10. Verfahren zum Betreiben einer Anordnung nach Anspruch 1,
dadurch gekennzeichnet,
daß zumindest das Kathodenabgas dem katalytischen Brenner (8) zugeführt wird, im katalytischen Brenner (8) verbrannt und auf eine erste Temperatur erhitzt wird, zu einer Expansionsmaschine (7) geleitet, dort auf eine zweite, geringere Temperatur abgekühlt wird, dem Heizraum (17) einer Reformierungs- und/oder einer Verdampfereinheit (9, 10) zugeführt und dort auf eine dritte, geringere Temperatur abgekühlt wird.

11. Verfahren nach Anspruch 10,
dadurch gekennzeichnet,
daß das Kathodenabgas beim Durchströmen des katalytischen Brenners (8) auf eine erste Temperatur zwischen 450°C und 900°C erhitzt wird.

12. Verfahren nach Anspruch 10,
dadurch gekennzeichnet,
daß das Kathodenabgas beim Durchströmen der Expansionsmaschine (7) um eine Temperatur (ΔT) zwischen 50°C und 200°C abgekühlt wird.

13. Verfahren nach Anspruch 10,
dadurch gekennzeichnet,
daß das Kathodenabgas beim Durchströmen des Heizraums (17) auf eine dritte Temperatur von weniger als 200°C abgekühlt wird.

14. Verfahren nach Anspruch 10,
dadurch gekennzeichnet,
daß dem katalytischen Brenner (8) zur Verbrennung des Kathodenabgases ein Brennmittel zudosiert wird.

15. Verfahren nach Anspruch 14,
dadurch gekennzeichnet,
daß die Zudosierung des Brennmittels in den katalytischen Brenner (8) abhängig von einer gewünschten Temperatur eines Mediums im Heizraum (17) der Reformierungs- und/oder Verdampfereinheit (9, 10) erfolgt.

16. Verfahren nach Anspruch 14,
dadurch gekennzeichnet,
daß als Brennmittel Anodenabgas und/oder Kraftstoff verwendet wird.

17. Verfahren nach Anspruch 14, 15 oder 16,
dadurch gekennzeichnet,
daß die Zudosierung des Brennmittels in den katalytischen Brenner (8) gesteuert wird, wobei Daten aus einem Kennfeld einer Steuereinrichtung entnommen werden, welches einen Temperaturabfall des Kathodenabgases über der Expansionsmaschine (7) in Abhängigkeit von einem Druckverhältnis (π) der Expansionsmaschine (7) enthält.

18. Verfahren nach Anspruch 10,
dadurch gekennzeichnet,
daß das Kathodenabgas im katalytischen Brenner (8) so hoch erhitzt wird, daß die Expansionsmaschine (7) und der Verdichter (5) als Generator zusammenwirken und der Generator einem elektrischen Antrieb des Verdichters (5) elektrische Energie zur Verfügung stellt.
